# EUROPÄISCHE PATENTSCHRIFT

(11) **EP 3 491 293 B1**
(45) Veröffentlichungstag und Bekanntmachung des Hinweises auf die Patenterteilung: **03.06.2020**
(21) Anmeldenummer: 17749411.9
(22) Anmeldetag: 26.07.2017
(51) Int. Cl.: F23G 5/00, F23G 5/04, F23G 5/30, F23G 5/46, F23G 7/00, F23G 7/10, F23L 15/04, F23J 15/02, F23K 5/18, F23D 14/68, F23G 5/40

(54) **GESTUFTE FEUERUNG**
STAGED FIRING
COMBUSTION ÉTAGÉE

(30) Priorität: 28.07.2016 DE 102016213954
(43) Veröffentlichungstag der Anmeldung: 05.06.2019
(73) Patentinhaber: floradry GmbH, 81829 München (DE)
(72) Erfinder: SCHLEDERER, Swantje M., 85567 Grafing (DE); STEER, Thomas, 85356 Freising (DE); WERNER, Hans, 81825 München (DE)
(74) Vertreter: Leske, Thomas
(86) Internationale Anmeldenummer: PCT/EP2017/068825
(87) Internationale Veröffentlichungsnummer: WO 2018/019861

(56) Entgegenhaltungen:
- EP-A1- 1 161 312
- EP-A1- 2 749 362
- CN-A- 104 976 622

## Beschreibung

Die Erfindung betrifft eine gestufte Feuerung zur Verbrennung von feuchten Einsatzstoffen mit einer als Wirbelschichtfeuerung ausgebildeten Vorverbrennung und einer Nachverbrennung, bei welcher durch einen Wärmeübertrager der erforderliche Heizwert der Einsatzstoffe auf ein Minimum reduziert wird.

### Stand der Technik

Nasse Stoffe mit hohem organischen Anteil sind in der Industrie häufig vorkommende Produkte oder Nebenprodukte von Prozessen. Zielstellung ist stets, diese Stoffe energetisch zu nutzen oder zumindest die Menge an zu entsorgendem Stoff zu minimieren. Zumeist werden sie zuvor getrocknet. Besonders anspruchsvoll wird dies, wenn es sich bei der Trocknung um einen erforderlichen Prozessschritt handelt, um das dann trockenere Gut in einem weiteren Schritt energetisch zu nutzen, und wenn das nasse Gut ohne vorgeschaltete Trocknung nicht über ausreichend eigene Energie zur Aufrechterhaltung einer Verbrennung ohne äußere Beheizung verfügt. Weiterhin steigen die Anforderungen, wenn die Anlagen im Leistungsbereich kleiner werden. Bei derartigen Anforderungen bietet der Stand der Technik oftmals keine oder keine befriedigenden Lösungen, besonders, wenn sie nicht mehr ohne externe Stützenergie auskommen. Dies ist insbesondere bei Schlämmen der Fall und hier insbesondere bei Klärschlamm, weiterhin bei Gärresten.

Bei Klärschlamm ergibt sich das Problem, dass eine mechanische Entwässerung bis maximal zu einem Feststoffanteil von ca. 25% möglich ist. Für eine Verbrennung bedarf es in aller Regel eines Feststoffgehalts von mindestens 40%. Die hierbei eingesetzten Verbrennungsanlagen können die Wärme zur Trocknung des Schlammes von 25% auf 40% Trockensubstanz nicht bereitstellen, so dass stets externe Wärme oder, allgemeiner formuliert, externe Energie durch Zufeuerung teurer Primärbrennstoffe mit erforderlich ist, um den Prozess aufrechtzuerhalten. Die adiabate Verbrennungstemperatur bei nassen Einsatzstoffen ist zu niedrig, um eine ausreichende Temperatur für eine saubere Verbrennung zu erreichen.

Als Abhilfe wäre erforderlich, die Abgaswärme der Abgase nach der Verbrennung bei hoher Temperatur an die Verbrennungsluft vor Eintritt in den Feuerraum zu übertragen, um das Temperaturniveau der Verbrennung anzuheben. Dies verbietet sich jedoch, da die Abgase nach der Verbrennung üblicherweise aggressiv sind und die Metalloberfläche eines Wärmeübertragers angreifen würden. Ein dauerhafter Betrieb eines derartigen Wärmeübertragers ist nicht möglich.

Die Verbrennung von Feststoffen erfordert in aller Regel einen relativ hohen Luftüberschuss, der die für die Trocknung zur Verfügung stehende Wärme weiter reduziert. Die nutzbare Wärme reicht für die Bereitstellung der Trocknungswärme auch bilanztechnisch nicht mehr aus. Zur Trocknung des Klärschlamms wird zusätzliche Energie benötigt.

Aus diesem Grund ist bislang keine Technologie mit kleinen und dezentralen Anlagen bekannt. Stand der Technik ist heute die Sammlung von allenfalls mechanisch entwässertem Klärschlamm aus einer Vielzahl von Kläranlagen zu einer großen, zentralen und stationären Verwertungsanlage als Wirbelschichtfeuerung als Monoverbrennung, in aller Regel mit einer Leistung von mehr als 20 MW, oder als Mitverbrennung in großen Kohlekraftwerken mit typisch 500 - 2.000 MW Feuerungsleistung. Derartige Anlagen fassen alle Kläranlagen mehrerer Landkreise zusammen.

Derartige Anlagen werden oft als stationäre Wirbelschicht ausgeführt. Derartige Feuerungen sind bekannt, wie beispielsweise in Wikipedia unter dem Stichwort "Wirbelschichtfeuerung" beschrieben ist. Sie finden vielfältig großtechnische Anwendungen im Leistungsbereich über 10 MW, insbesondere in Kraftwerken zur Stromerzeugung oder in Müllverbrennungsanlagen oder zur Verbrennung von thermisch getrocknetem Klärschlamm. Die Abgasreinigung erfolgt bei diesen Anlagen am Ende des Abkühlvorgangs bzw. der Nutzung der in den Abgasen enthaltenen Wärme bei einer Temperatur von rund 150 - 200 °C, üblicherweise mit einem Gewebefilter, nur selten mit einem Elektrofilter. Das Prinzip dieser Feuerungen beruht auf der Verbrennung von zerkleinertem Brennstoff in einer Wirbelschicht aus heißem Bettmaterial, beispielsweise Quarzsand; die typische Körnung des Quarzsandes oder auch anderen Bettmaterials liegt bei ca. 0,8 - 1 mm äquivalentem Durchmesser. Das Bettmaterial kann zur Begünstigung oder Vermeidung einzelner Reaktionen mit anderen Materialien dotiert sein. Der Brennstoff und das Bettmaterial werden zusammen durch Zugabe eines Fluidisierungsmediums z. B. Luft oder Dampf in der Schwebe gehalten und dadurch fluidisiert. Die zerkleinerten Brennstoffpartikel haben eine große Oberfläche, so dass ein guter Abbrand erfolgen kann. Die Fluidisierung des Bettmaterials hat einen sehr guten Impuls- und Wärmeaustausch zur Folge, so dass eine im Wesentlichen gleichmäßige Temperatur in der Wirbelschicht herrscht. Das Bettmaterial prägt diese Temperatur dem eingebrachten Brennstoffmassenstrom als Reaktionstemperatur auf. Die Temperatur des Bettmaterials ist durch die Anlagenregelung bestimmbar. Hierbei kann die Bildung schädlicher Gase, insbesondere von Stickstoffoxiden, gering gehalten werden. Bei den Großanlagen nach dem Stand der Technik grenzen die Vorverbrennungszone (Wirbelschicht) und die Nachverbrennungszone (Oberfeuer) direkt aneinander. Die Verbrennung der Brennstoffe erfolgt in einem Zug, d.h. ohne dass dem Abgas an irgendeiner Stelle noch einmal Wärme von außen zugeführt oder in einem chemisch nicht-reaktiven Bereich Wärme entzogen wird. Die Abscheidung von Staub erfolgt nach dem Ende der Verbrennung.

In DE 101 43 427 A1 ist eine Vorrichtung zur thermischen Verwertung von biologischen Stoffen beschrieben, bei der verschiedene biologische Materialien zu einem Gemisch mit einem definierten Heizwert vereint und in einer stationären Wirbelschicht vergast werden. Der Vorrichtung kann eine Vortrocknung des Brennstoffs durch Abwärme aus der Verbrennung vorgeschaltet werden. Hauptaugenmerk der Erfindung ist die Reinigung der bei der Vergasung entstehenden brennbaren Gases von langkettigen Kohlenwasserstoffen (Teeren) durch eine Wäsche mit einer organischen Waschflüssigkeit (Öl) sowie die Verwendung des mit Teeren beladenen Öles als Zündöl in einem Zündstrahlmotor, in dem auch das brennbare Gas verbrannt werden soll. Diese Anlage dient der Erzeugung von Produktgas und nicht primär der Trocknung von feuchtem Gut. Diese Beschreibung enthält keinerlei Aussage zur Integration der möglichen Vortrocknung mit dem Vergaser.

Ein weiteres Feuerungskonzept ist aus DE 10 2006 053 337 A1 bekannt. In dieser Druckschrift wird eine Anordnung zum Mitverbrennen von Biomassen und organischen Abfällen in einer Kohlestaubfeuerung zur Erzeugung von Dampf beschrieben. Zum Betrieb des zugehörigen Trockners für die feucht zugeführten Sekundärbrennstoffe wird ein Teil des Abgasstromes der Feuerung ausgekoppelt und einem Wärmeübertrager zugeführt, der mit dem Trockner verbunden ist. Durch die Verwendung von mehreren verschiedenen Brennstoffen ist die in
DE 10 2006 053 337 A1 beschriebene Anlage aufwendig, zumal sie der Erzeugung von Dampf dient und nicht speziell zur Trocknung von Biomasse oder Klärschlamm ausgelegt ist. Wesentliches Merkmal dieser Anlage ist, dass der Wärmehaushalt in der Feuerung durch den Primärbrennstoff bestimmt wird. Der Wassergehalt des Sekundärbrennstoffs und damit die Menge der Brüden, in Relation zum Energieinhalt des Sekundärbrennstoffs, sind nicht von Relevanz. Die Aufgaben einer thermodynamischen Integration stellen sich bei diesem Verfahren nicht und werden daher naturgemäß auch nicht gelöst.

In DE 10 2014 106 901 A1 ist ein Vergaser und Verfahren zur Erzeugung eines brennbaren Gases aus kohlenstoffhaltigen Einsatzstoffen beschrieben. Die Erfindung beschreibt detailliert einen möglichen Verfahrensablauf im Vergaser. Eine Abkühlung der Abgase aus dem Vergaser vor der Gasreinigung (Staubabscheidung) erfolgt einzig zu dem Zweck, um die werkstofftechnischen Temperaturen in der Gasreinigung zu beherrschen, die üblicherweise unterhalb der Betriebstemperatur des Vergasers liegen. Der Verbrennungsluft kann Wasserdampf beigemischt werden. Eine Beimischung von rezirkuliertem Abgas ist nicht vorgesehen.

Die EP 1 161 312 A1 zeigt eine gestufte Feuerung zur Verbrennung von feuchten Einsatzstoffen mit einer Vorverbrennung, einem Wärmeübergang in einem Wärmetauscher, einer Staubabscheidung und einer Nachverbrennung, wobei beim Wärmeübergang im Wärmetauscher Abgase aus der Nachverbrennung abgekühlt werden und Verbrennungsluft zur Vorverbrennung aufgeheizt und anschließend der Vorverbrennung zugeführt wird.

### Aufgaben und Gegenstand der Erfindung

Der Erfindung liegt die Aufgabe zugrunde, eine gestufte Verbrennung mit einer stationären Wirbelschichtfeuerung der eingangs genannten Art zu schaffen, bei der feuchtes Gut eingesetzt werden kann, mit dem wesentlichen erfindungsgemäßen Merkmal, dass Einsatzstoffe noch bei einem wesentlich höheren Wasseranteil und wesentlich niedrigerem Heizwert einsetzbar sind, als dies bislang beim Stand der Technik möglich ist und die Anlage dennoch energieautark ist.

Die Aufgabe wird durch eine gestufte Verbrennung gemäß Anspruch 1 gelöst. Bevorzugte Weiterbildungen der erfindungsgemäßen gestuften Verbrennung ergeben sich aus den Unteransprüchen.

Die Darstellung der Erfindung erfolgt im Wesentlichen für den Einsatzstoff "Klärschlamm", da hier die Erfahrung und der Stand der Technik am klarsten ist, um die Erfindung darzustellen. Sie ist jedoch auch für alle anderen im weiteren genannten Einsatzstoffe wie z. B. Gärreste, Laub, Grasschnitt, Algen, Wasserhyazinthen, Abfälle der Lebensmittelindustrie gedacht, selbst wenn dies im Einzelfall nachfolgend nicht jeweils separat erwähnt ist.

Gegenstand dieser Erfindung ist ein Verfahren, das es ermöglicht, nasse Einsatzstoffe nach der mechanischen Entwässerung mithilfe einer mobilen, dezentralen, blasenbildenden Wirbelschichtfeuerung so energetisch zu verwerten, dass keine externe Wärme oder externe Energie zur Aufrechterhaltung des Prozesses erforderlich ist. Die Anlagengröße orientiert sich im erfindungsgemäßen Verfahren an dem Bedarf des dezentralen Anfalls der nassen Einsatzstoffe, also z. B. an der Größe einer einzelnen Kläranlage. Eine Anlage mit 300 kW Leistung ist zum Beispiel für eine Kläranlage mit einem jährlichen Anfall von ca. 3.000 t mechanisch entwässertem Schlamm geeignet, das entspricht einer Gemeinde mit ca. 4.000 Einwohnern. Nach dem Stand der Technik kann eine Kläranlage dieser Größe den anfallenden Klärschlamm nicht selbst verwerten, sondern muss ihn - nach eventueller Zwischenlagerung - aufwändig zu zentralen Verwertungsanlagen bringen und für die Übernahme noch bezahlen. Der Einsatz der erfindungsgemäßen Anlage spart nicht nur die Kosten für Zwischenlagerung, Transport und Entsorgung, sondern erzeugt auch noch einen mineralischen Dünger mit hohem Phosphor-Gehalt, der einen positiven finanziellen Wert darstellt. Dezentrale, kleinteilige Stoffkreisläufe genießen in der Bevölkerung eine sehr viel höhere Akzeptanz als zentrale Großanlagen, so dass erst durch den dezentralen Anfall des Düngers auch eine Akzeptanz in der nutzenden Landwirtschaft hergestellt werden kann.

Gegebenenfalls erzeugt die Anlage noch nutzbare Überschusswärme.

Die maximale Größe der mobilen Anlage ist auf ca. 3 MW beschränkt.

Sofern eine Vortrocknung des nassen Einsatzstoffes außerhalb der Wirbelschichtfeuerung erforderlich werden sollte, erfolgt dies erfindungsgemäß mit der im Abgas der Wirbelschichtfeuerung enthaltenen Abwärme ohne die Zufuhr von Wärme von außen.

Wesentliches Merkmal der Gesamtanlage ist, dass nach der mechanischen Entwässerung von Biomassen oder Schlämmen, wie zuvor erwähnt, keine thermische Trocknung außerhalb der Wirbelschichtfeuerung und eines gegebenenfalls integrierten Trockners erforderlich ist.

Die Erfindung ist naturgemäß auch auf große Anlagen skalierbar, die natürlich dann nicht mehr mobil sind.

Erfindungsgemäß wird hierzu der nasse Einsatzstoff, allein oder in Mischung mit getrocknetem Einsatzstoff, zunächst auf ein fluidisiertes Bett aus heißem Sand (stationäre oder blasenbildende Wirbelschicht) aufgebracht. Das Bett aus heißem Sand wird mit heißer Verbrennungsluft von mehreren hundert Grad beaufschlagt, bevorzugt über 200 °C, optimal über 400 °C. Bevorzugterweise erfolgt dies auch im Leistungsbereich unter 3 MW Feuerungsleistung, genauer unter 1 MW Feuerungsleistung. Bevorzugterweise erfolgt dies auch in mobilen, dezentralen Anlagen. Die Menge an Luft enthält - durch Mischung mit Abgas aus der Feuerung - genau die Menge an Sauerstoff, die erforderlich ist, um durch eine Teilverbrennung des nassen Einsatzstoffes die Temperatur des Sandbettes aufrechtzuerhalten. Die Betriebstemperatur des Wirbelbettes läßt sich in einem weiten Bereich beliebig einstellen. Beim Einsatz von Brennstoffen mit niedrigem Ascheerweichungspunkt, wie z. B. Stroh, lässt sich eine Betriebstemperatur unterhalb so wählen, dass die Ascheerweichung sicher vermieden wird. Nach dem Austritt aus der Wirbelschicht werden gegebenenfalls ein weiterer Teilstrom der heißen Luft sowie gegebenenfalls die Brüden aus der Trocknung in die Abgase eingeblasen. Der nasse, feste Brennstoff wird hierbei in einen gasförmigen Brennstoff mit niedrigem Heizwert umgewandelt. Die Wirbelschicht und der sich anschließende Brennraum umfassen die Vorverbrennung. Im Abgas nach der Vorverbrennung befinden sich neben dem Stickstoff der Luft die brennbaren Komponenten Kohlenmonoxid (CO), Wasserstoff (H₂), diverse Kohlenwasserstoffe (CₘHₙ) sowie die Verbrennungsprodukte Kohlendioxid (CO₂) und Wasserdampf (H₂O). Die Abgastemperatur beträgt beim Austritt aus dem Reaktor ca. 700 °C. Dies ist die Gleichgewichtstemperatur, die sich aufgrund der Shift-Reaktion zwischen CO-H₂O und CO₂-H₂ einstellt. Die Verwendung von heißer Verbrennungsluft in der Wirbelschicht erhöht deren Energieeintrag und verringert dementsprechend den erforderlichen Energieeintrag von Seiten des Brennstoffs, der erforderlich ist, um das Energie-Gleichgewicht im Wirbelbett der Vorverbrennung aufrecht zu erhalten. Damit lässt sich der erforderliche Mindestheizwert des Brennstoffs vorteilhaft erniedrigen. Bei einer Wirbelschichttemperatur von 700 °C muss Verbrennungsluft von 200 °C um insgesamt 500 K erwärmt werden, während bei einer Verbrennungsluft von 500 °C eine Erwärmung um 200 K und damit rund 40% der erforderlichen Wärme ausreicht. Der maximal zulässige Wassergehalt im Brennstoff lässt sich so von 62% auf 75% steigern, der minimal erforderliche Heizwert fällt dementsprechend von 4.000 auf 1.500 kJ/kg. Klärschlamm kann nach dem Stand der Technik mechanisch auf ca. 27% Feststoffanteil oder 73% Wassergehalt entwässert werden, nicht jedoch auf 38% Feststoffanteil oder 62% Wassergehalt. Die direkte Nutzung von mechanisch entwässertem Klärschlamm ist daher nur in der erfindungsgemäßen Anlage möglich. Gleiches gilt analog für alle nass anfallenden Biomassen oder Schlämme, etc.

Durch die Einstellung der Luftzugabe in die Vorverbrennung lässt sich der Restkohlenstoffgehalt der Asche gezielt einstellen. Das Verfahren eignet sich daher auch zur Herstellung kohlenstoffhaltiger Dünger, die in der Diskussion um Bodenschutz und Humuserhaltung zunehmend an Bedeutung gewinnen. Ebenso könnte die Asche dann als Aktivkohle in technischen Anlagen eingesetzt werden.

Zur Darstellung des Verfahrens im kleinen Leistungsbereich werden einige typische Merkmale der Wirbelschichtfeuerung modifiziert. So wird anstelle eines Bettmaterials mit rund 1 mm mittlerem Durchmesser ein Material mit weniger als 0,5 mm eingesetzt, was die erforderliche Bauhöhe verringert und die Mobilisierung der Anlage erst ermöglicht.

Bei der mobilen, dezentralen, blasenbildenden Wirbelschicht (Leistungsbereich kleiner als 3 MW) verbleibt das Wirbelbett im Brennraum. Die Asche und der Bettabrieb können durch Entnahme aus dem Brennraum mit Hilfe des Bettabzugs nach unten entnommen werden. Üblich ist jedoch, nachdem sie klein gerieben wurden und mit dem Abgas mitgetragen werden, eine Abscheidung durch nachgeschaltete Abscheider. Erfindungsgemäß erfolgt die Abscheidung von Staub aus dem Abgas VOR der Komplettierung der Verbrennung und NACH einer Wärmeentnahme aus dem Abgas, wobei die entnommene Wärme der Verbrennungsluft für die Vorverbrennung zugeführt wird und diese erhitzt. Besonders vorteilhaft ist die erfindungsgemäße Abkühlung der Abgase mit gleichzeitiger Erhitzung der Verbrennungsluft, die der Vorverbrennung zu geführt wird, auf zumindest 200 °C, bevorzugt aber auf zumindest 400 °C. Die Aufheizung der Verbrennungsluft für die Vorverbrennung verringert den erforderlichen Umsatz von chemisch gebundener Energie des Brennstoffs in fühlbare Wärme im Abgas: Aschetrockene Brennstoffe haben bei stöchiometrischer Verbrennung in etwa das Potential, das Abgas um rund 1.700 K aufzuheizen. Wird die Feuerung mit Luftüberschuß betrieben, sinkt das Aufheizpotential entsprechend. Ein Luftüberschuß von 1,4 verringert beispielsweise die Spanne auf rund 1.300 K. Enthält der Brennstoff auch Wasser, so verringert sich dieser Wert weiter, da auch das im Brennstoff enthaltene Wasser bei der Verbrennung verdampft und der freigesetzte Wasserdampf weiter aufgeheizt werden muss. Erschwerend kommt hinzu, dass der Wasserdampf eine bis zu doppelt so hohe Wärmekapazität besitzt wie Abgas, so dass die mögliche Aufheizung sehr viel schneller sinkt, als bei der reinen Erhöhung des Luftüberschusses. Bei einem Wassergehalt von beispielsweise 60% im Brennstoff sinkt die Aufheizspanne auf 850 K. Bei einem Wassergehalt von 75% sinkt der Wert auf 530 K. Bei diesem niedrigen Aufheizspannen ist im Stand der Technik keine ordnungsgemäße Führung der Verbrennung mehr möglich.

Ziel der Erfindung ist es, die erforderliche Freisetzung von chemisch gebundener Energie in der Vorverbrennung auf ein Minimum zu reduzieren, um unter Nutzung der dann überschüssigen chemisch gebundenen Energie einen möglichst hohen Gehalt an Wasser im Brennstoff bei der Zuführung in die Vorverbrennung zuzulassen. Dies geschieht zum einen durch die Ausführung einer zweistufigen Verbrennung. In der ersten Stufe erfolgt eine Verbrennung mit einem Luftverhältnis von unter 1; die theoretisch mögliche Aufheizspanne bei trockenem Brennstoff entspricht dann der bei stöchiometrischer Verbrennung, da - in erster Näherung - der Teil der chemisch gebundenen Wärme, der freigesetzt wird, dem Teil der Luft entspricht, der im Verhältnis zur stöchiometrischen Verbrennung zugeführt wird. Die Aufheizspanne ist somit bei unterstöchiometrischer Fahrweise in erster Näherung unabhängig vom Grad der Unterstöchiometrie. Zum zweiten geschieht dies durch die Aufheizung der Verbrennungsluft vor dem Eintritt in die Vorverbrennung auf eine möglichst hohe Temperatur. Die Vorverbrennung erfolgt typischerweise bei einer Temperatur von 700 °C. Könnte man nun die zugeführte Verbrennungsluft auf 700 °C vorwärmen, so würde es - in erster Näherung - ausreichen, die Menge an chemisch gebundener Energie freizusetzen, die erforderlich ist, um das Wasser im Brennstoff zu verdampfen und den Wasserdampf auf 700 °C aufzuheizen. Zielstellung der Erfindung ist es, die Verbrennungsluft möglichst bis zur Betriebstemperatur der Vorverbrennung vorzuwärmen.

Die Verbrennungsluft in der Wirbelschicht hat grundsätzlich ZWEI Aufgaben. Zunächst ist dies die Bereitstellung des Sauerstoffs, der erforderlich ist, um durch Oxidation des Brennstoffs die Wärme bereitzustellen, die die Betttemperatur konstant hält. Die zweite wesentliche Aufgabe ist es, die Wirbelschicht zu fluidisieren. Die Fluidisierung erfordert stets eine Mindestmenge an Luft, die in das Wirbelbett geblasen wird. Erfindungsgemäß wird die Verbrennungsluft mit rezirkuliertem Abgas mit wenig Sauerstoffanteil gemischt, um den Sauerstoffgehalt unabhängig von der zugeführten Luftmenge einstellen zu können.

Als Brennstoffe können in der erfindungsgemäßen Wirbelschichtfeuerung viele Arten von Brennstoffen eingesetzt werden. Mehrere verschiedene Brennstoffe können zugleich eingesetzt werden, was diese Art der Feuerung sehr flexibel macht. So sind feste, flüssige und gasförmige Brennstoffe in beliebiger Mischung verwendbar, wobei keine Vormischung erforderlich ist. Die Mischung erfolgt selbständig durch die Wirbelschicht, auch dann, wenn die Brennstoffe räumlich getrennt zugegeben werden. Im Betrieb des erfindungsgemäßen Trockners ist es von Vorteil, dass der Feuerung eine Mischung aus zu trocknendem oder getrocknetem Gut zuführbar ist, wobei die Mischung auch das Verhältnis "0" zu "100" sowohl für den nassen, als auch den trockenen Anteil umfasst.

Als Brennstoffe sind beispielsweise primäre Biomassen wie unter anderem Grasschnitt, Laub, Strauchschnitt, holziges oder krautiges Material, Algen aus Süß-, Salz- und Brackwasser, Wasserhyazinthe, Jatropha-Nüsse mit allen Teil und Nebenproduktion, wie z. B. Stroh und Spreu von Getreide, Spelten aus der Mahlung von Getreidekörnern, Reisschalen, etc. denkbar. Genauso sind jedoch Biomassen nach einer Erstnutzung denkbar, wie dies Gärreste, Treber, Abfälle aus der Lebensmittelproduktion oder Lebensmittelabfälle sind, um nur einige Beispiele zu nennen; betrachtet man den Bereich genauer, erkennt man die Vielfältigkeit: so entsteht bei der Herstellung von Ketchup unter anderem Tomatenkraut als Abfall, bei der Herstellung von Babynahrung entstehen zum Beispiel Karottenschalen, bei der Herstellung von Obstsalat fallen viele Schalen von Zitrusfrüchten an, bei der Pressung von Olivenöl fallen Olivenpresskuchen und Olivenkerne an, bei der Herstellung von Zucker aus Zuckerrohr fällt Bagasse an. Weiterhin sind alle Stoffe denkbar, die als Exkremente von Lebewesen anfallen. Dies reicht beispielsweise von Klärschlämmen über tierischen Mist, z. B. von Hühnern oder Pferden, Kühen oder Schweinen oder anderen Tieren, mit oder ohne Einstreu. Weiterhin existieren viele industrielle Schlämme, die ebenfalls einsetzbar sind. Hierunter fallen beispielsweise Schlämme aus der Altpapieraufbereitung und der Abwasseraufbereitung der Papierfabriken, Ölschlämme, Schlämme aus Gerbereien und anderen Industriezweigen.

Ein wesentlicher Vorteil der erfindungsgemäß eingesetzten Wirbelschicht ist, dass sich der Brennstoff in einem bewegten Bett befindet. Brennstoff und Verbrennungsluft werden durch das Sandbett homogen verteilt. In der Wirbelschicht befinden sich ca. 98 - 99% an Sand und nur ca. 1 - 2 % Brennstoff. Der Sand bestimmt in der Wirbelschicht die Reaktionstemperatur; er sorgt für die notwendige Energie zur Aktivierung der Reaktionen und nimmt die bei den Reaktionen freiwerdende Energie auf, ohne dabei seine Temperatur wesentlich zu verändern.

Bei anderen Feuerungssystemen besteht grundsätzlich das Problem, dass die Verbrennungsluft bevorzugt dort entlangströmt, wo sich wenig oder kein Brennstoff befindet; es existieren somit Zonen mit grob unterschiedlichen Verhältnissen von Brennstoff zu Luft. Dies führt dann zu einer sehr ungleichmäßigen Reaktion mit schlechter Qualität und Homogenität der Abgase und, speziell dort, wo Luft und Brennstoff in nahezu stöchiometrischem Verhältnis vorliegen, zu sehr hohen lokalen Verbrennungstemperaturen mit einer starken Tendenz zur Bildung von Schlacke. Grundsätzlich benötigen die anderen Feuerungssysteme im Stand der Technik in der Folge einen hohen Luftüberschuß, um auch an den Stellen mit ungünstiger Verteilung von Luft und Brennstoff noch ausreichend Sauerstoff zur Verfügung stellen zu können. Dies reduziert den Wirkungsgrad und ist auch ungünstig hinsichtlich der Vermeidung von Schadgasanteilen im Rauchgas. Entweder verbleibt wegen zu geringem Sauerstoff ein erheblicher Anteil an Kohlenmonoxid (CO) und organischem Kohlenstoff (TOC) oder es entsteht wegen Sauerstoffüberschuß und lokal zu hohen Temperaturspitzen ein erheblicher Anteil an Stickoxid. Besonders nachteilig ist, dass beides auch parallel on unterschiedlichen Orten einer derartigen Feuerung auftreten kann. Die erfindungsgemäße stationäre Wirbelschichtfeuerung stellt an jeder Stelle des Wirbelbettes ein optimales Verhältnis zwischen Brennstoff und Luft sicher und vermeidet damit die Nachteile der anderen Feuerungssysteme hinsichtlich der Emissionen aus dem Stand der Technik systeminhärent. Eine exzessive Luftvorwärmung wird ermöglicht, weil die Verbrennungstemperatur durch die Temperatur des Sandbettes bestimmt wird und Temperaturspitzen weder nach unten noch nach oben möglich sind.

Wesentliches Merkmal einer bevorzugten erfindungsgemäßen Wirbelschichtfeuerung ist, dass die Verbrennungsluft auf zumindest 200 °C vorgewärmt wird, bevorzugt auf zumindest 400 °C. Die Aufheizung erfolgt bevorzugt zumindest zweistufig. Die erste Stufe wäre in diesem Falle eine Aufheizung unter Nutzung der im Abgas vor dem Kamin enthaltenen Abwärme, die zweite Stufe direkt im Gegenstrom mit dem Abgas aus der Vorverbrennung. Falls erforderlich oder vorteilhaft, kann auch noch eine dritte Stufe als Zwischenschritt ergänzt werden, bei der Wärme aus dem Abgas VOR der externen Nutzung Verwendung findet. Bei Verbrennungssystemen ohne Wirbelschicht verbietet sich zumeist eine Luftvorwärmung, da die Verbrennungsluft kalt benötigt wird, um die Bauteile ausreichend zu kühlen, auf denen sich das feste Glutbett der Verbrennung befindet. Gerade die Möglichkeit oder Unmöglichkeit einer hohen Luftvorwärmung hat entscheidenden Einfluss auf den Wirkungsgrad einer Anlage.

Das Abgas aus der Vorverbrennung stellt den jetzt gasförmigen Brennstoff dar. Es wird erfindungsgemäß im Wärmeübertrag mit der Verbrennungsluft für die Vorverbrennung abgekühlt. Die Führung der staubhaltigen Gase im Wärmeübertrager erfolgt geneigt oder vertikal von oben nach unten, so dass aller im Gas enthaltene Staub durch die Schwerkraft alleine den Wärmetauscher passiert, ohne dass die Gase die Aufgabe haben, den Transport des Staubes zu gewährleisten. Ein derartiger Wärmtauscher wird im Stand der Technik in Großanlagen nicht eingesetzt, da er konstruktiv nicht darstellbar ist oder die Abgase komplett oxidiert sind und damit der Wärmeübertrager korrodieren würde. Die Bauform mit dem vertikalen, abwärts führenden Rohr für die staubbeladenen Abgase eignet sich ausschließlich für den kleinen Leistungsbereich. Bei Großanlagen wird die Verbrennungsluft im Stand der Technik mit weniger als 200 °C zugeführt, was für den Gesamtprozess wärmetechnisch sehr nachteilig ist.

Das auf ca. 450 °C abgekühlte brennbare Gas gelangt erfindungsgemäß direkt in einen weiteren Reaktor, in dem der Staub zurückgehalten wird (Filtereinheit). In einer erfindungsgemäßen Ausführung der Wirbelschichtfeuerung erfolgt die Abscheidung des Staubes, nach dem die festen Bestandteile des Brennstoffs - bis auf die verbleibende Asche - in die Gasphase überführt worden sind; es ist ausreichend, in die Wirbelschicht lediglich die Menge an Sauerstoff zuzuführen, die erforderlich ist, um die Temperatur der Wirbelschicht aufrechtzuerhalten. Die Überführung der festen Brennstoffe in die Gasphase erfolgt bei der Temperatur der Wirbelschicht selbstgängig. Optimalerweise werden die Abgase lediglich in einem Wärmeübertrager gegen die Frischluft zur Wirbelschicht (2. Vorwärmstufe) gekühlt, bevor sie bei einer Temperatur von zumindest 450 °C in den Staubabscheider gelangen. Der Staubabscheider wird aus keramischen Materialien oder aus Sintermetallen gebildet. Die einzelnen Elemente sind kerzenförmig ausgebildet. Die Kerzen sind vertikal eingebaut, am Boden festverschlossen und nur am oberen Ende mit einer Öffnung versehen. Das staubbeladene Gas durchströmt die Kerze von außen nach innen und verlässt die Kerze durch ihre Öffnung auf der Oberseite. Der Staub bleibt an der Außenseite der Kerze haften. Die Abreinigung des Staubs von der Kerze erfolgt durch eine kurzzeitige Strömungsumkehr mit staubfreiem Inertgas. Das jetzt durch Kerze von innen nach außen strömende Inertgas, vorzugsweise Stickstoff, Kohlendioxid, Kohlenmonoxid oder Wasserdampf, nimmt die an der Außenseite anhaftenden Staubpartikel mit sich. Die Staubpartikel fallen in der Folge in den unterhalb der Kerzen befindlichen Sammeltrichter. Das brennbare Gas wird so vom Staub gereinigt und verlässt den Reaktor technisch staubfrei. Der Staub wird über eine Schleuse ausgetragen. Die Schleuse ist dergestalt ausgeführt, dass ein Einbruch von sauerstoffhaltiger Luft sicher vermieden wird.

Das Filter ist vorteilhaft als Mehrkammersystem mit online-Reinigung ausgeführt, bei dem zu Reinigungszwecken während des Betriebs entweder einzelne Kammern abgeschaltet werden oder die Abreinigung sogar mittels Aufprägung von Gegenstrom ohne Abschaltung einzelner Kammern erfolgt. Damit lassen sich auch im kleinen Leistungsbereich unter 3 MW Anlagen realisieren, die sowohl kontinuierlich betreibbar sind als auch die Emissionsqualitäten von Großanlagen einhalten.

Sofern die Gasreinigung erst nach dem Abschluss der Verbrennung angeordnet werden soll, würde sie bevorzugt erst nach der Nutzung der im Abgas enthaltenen Wärme angeordnet, um im niedrigeren Temperaturbereich zu arbeiten.

Die bei hohen Temperaturen in der Filtereinheit abgeschiedene, staubförmige Asche enthält einen sehr geringen Anteil an Schwermetallen, da diese großteils noch dampfförmig vorliegen. Diese Asche eignet sich besonders zur Nutzung der enthaltenen Mineralstoffe und, speziell im Falle der Nutzung von Klärschlamm, besonders zur weiteren Nutzung des im Klärschlamm enthaltenen Phosphors, entweder durch Extraktion oder durch direkte Nutzung der Klärschlammasche.

Besonders vorteilhaft ist, dass die Asche vor der vollständigen Oxidation abgeschieden wird. Somit wird auch die Oxidation des Phosphors auf ein Minimum reduziert, was die direkte Verfügbarkeit des Phosphors aus der Asche für biologische Düngezwecke maßgeblich steigert. Bei einer Monoverbrennung in Großanlagen nach dem Stand der Technik erfolgt die Staubabscheidung stets NACH der vollständigen Verbrennung und im Temperaturbereich unter 200 °C, so dass die Vorteile der erfindungsgemäßen Anlage in jenen Anlagen nicht lukriert werden können.

Die weltweiten Prognosen für verfügbare Rohrstoffe deuten auf einen Engpass von Phosphor hin, so dass der Wiederverwertung von Phosphor aus dem Klärschlamm eine Schlüsselfunktion zukommt. Die erfindungsgemäße Anlage kann durch die gezielte Abtrennung der Asche und Nutzbarmachung des enthaltenen Phosphors in weiteren Stoffkreisläufen hierzu einen Beitrag leisten.

Für die noch im Abgas enthaltenen Schwermetalle wird gegebenenfalls eine gezielte Kondensationsfalle installiert. Die Schwermetalle werden in dieser Kondensationsfalle abgeschieden und stellen dann keine Verunreinigung der Asche mehr dar, sondern liegen - separat von der Asche - in konzentrierter Form vor und können wieder dem Wertstoffkreislauf zugeführt werden.

Nach dem Staubabscheider erfolgt erfindungsgemäß in einer weiteren Brennkammer die vollständige Oxidation der Abgase (Nachverbrennung). Die Oxidation erfolgt bevorzugt gestuft in Form einer mehrfachen Zugabe eines Teilstroms von Verbrennungsluft, bevorzugt in einer 4-fach gestuften Luftzugabe, mindestens aber in einer 2-fach gestuften Luftzugabe. Hierdurch lassen sich die Emissionen von Stickoxiden deutlich reduzieren, da in allen Sektionen mit Ausnahme der letzten Sauerstoffmangel herrscht und Stickstoff bei Sauerstoffmangel bevorzugt zu molekularem Stickstoff reagiert und nicht zu Stickoxid. Da das Gas keinen Staub mehr enthält, kann es mit sehr geringem Luftüberschuss verbrannt werden, ähnlich den Bedingungen bei der Nutzung von Erdgas. Die Verbrennungsqualität hinsichtlich der Emissionen entspricht so ebenfalls dem Niveau von Erdgas. Die Emissionen bei der Verbrennung von Erdgas liegen wesentlich unterhalb der Feststofffeuerungen nach dem Stand der Technik. Die nutzbare Wärme des Gases bzw. des ursprünglich eingesetzten Brennstoffes wird so maximiert.

Diese Schaltung erlaubt es erfindungsgemäß, aus festem Brennstoff gemäß vorhergehender Aufzählung ein staubfreies Abgas bei einer Temperatur von typisch 950 °C zu erzeugen. Die Staubfreiheit ist im Unterschied zum Stand der Technik ein wesentliches Qualitätsmerkmal und erlaubt erfindungsgemäß die Ausführung der nachgeschalteten Wärmenutzung in einer Art und Weise, wie es sonst dem Einsatz von Erdgas vorbehalten ist. Mit der erfindungsgemäßen Anlage können daher beispielsweise Heizflächen mit Rippenrohren versehen werden, ohne dass ein Risiko der Verschmutzung besteht. Ebenso können aufwändige Vorrichtungen zur Abreinigung auch unberippter Heizflächen von Staub entfallen. Weiterhin ist die Bauhöhe von Wärmeübertragerbündeln nicht mehr auf die Eindringtiefe der Reinigungseinrichtungen beschränkt. Ebenso können höhere Abgasgeschwindigkeiten zugelassen werden, ohne das Risiko der Erosion der Rohre einzugehen.

Die Verbrennungsqualität erlaubt gemäß den in den verschiedenen Ländern gültigen Gesetzen zur Luftreinhaltung und Abfallverbrennung, dass in der Anlage unter Einhaltung aller jeweils geltenden Regelungen auch Abfälle als Brennstoff eingesetzt werden können, wie z. B. der Einsatz von belastetem Altholz in Europa den Vorschriften der EU 2000/76 unterliegt. Die Anlage würde in diesem Fall so betrieben, dass die Einhaltung der Mindestverbrennungstemperatur nach der letzten Luftzugabe regelungstechnisch sichergestellt ist. Die erfindungsgemäße Technologie erlaubt erstmalig den Einsatz dieser Abfälle in kleinen Anlagen unter 3 MW. Der Stand der Technik erlaubt dies nicht, da als Arbeitsmedium ausschließlich Wasserdampf eingesetzt wird und sich hierfür im Leistungsbereich unter ca. 10 MW keine wirtschaftlichen Arbeiten errichten und betreiben lassen.

Nach der Nachverbrennung kann die im Abgas enthaltene Wärme bei nassen Brennstoffen erfindungsgemäß zum Betrieb des Trockners des Brennstoffs genutzt werden. In aller Regel wird nicht die komplette im Abgas enthaltene Wärme zum Betrieb des Trockners benötigt. Die Überschusswärme kann - vor oder nach der Beheizung des Trockners - in geeigneter thermodynamischer Schaltung zur Bereitstellung von externer Wärme und / oder zur Erzeugung von elektrischer Energie genutzt werden. Da das Gas staubfrei ist, bietet sich zur Nutzung bspw. vorteilhaft ein Stirling-Motor an, der thermodynamisch den höchsten Wirkungsgrad besitzt, dessen Wärmeübertrager aber - prozessbedingt - bei staubhaltigen Abgasen sehr schnell verstopfen und nicht reinigbar sind. Bevorzugt kann dies so erfolgen, dass die Abwärme zunächst zur Erzeugung elektrischer Energie verwendet wird, vorteilhaft beispielsweise mittels einer ORC-Anlage, eines Dampfmotors oder eines Stirling-Motors. Als Brennkammer könnte auch die Brennkammer einer Arbeitsmaschine direkt Verwendung finden, bevorzugt die einer Gasturbine. Entsprechend würde dann die verbleibende Abwärme zur Trocknung verwendet wird. Sofern keine Trocknungswärme benötigt wird, könnte die Nutzung der im Abgas enthaltenen Wärme auch auf die Erzeugung elektrischer Energie beschränkt sein oder eine Kopplung mit anderweitiger Nutzung der Abwärme erfolgen, z. B. in einem Fernwärmenetz.

Die Abgase können vor der Nutzung durch Mischung mit abgekühltem Abgas nach der Nutzung auf eine beliebige Temperatur abgekühlt werden. Bei einem Floradry-Kontakttrockner, welcher in der von der Anmelderin am gleichen Tag eingereichten parallelen Anmeldung beschrieben ist, dies beispielsweise die Temperatur von 400 °C sein, die als Eintrittstemperatur nicht überschritten werden sollte. Ein Dampfmotor oder eine ORC-Anlage sind vielfach auf eine Eintrittstemperatur von rund 550 °C ausgelegt, da dies der üblichen Abgastemperatur eines BHKW's entspricht. Diese Temperatur kann mit der erfindungsgemäßen Anlage leicht eingestellt werden. Anpassungen an den Aggregaten zur Nutzung der im Abgas enthaltenen Wärme können so vermieden werden, was erheblichen Aufwand und Investitionskosten einspart. Diese Schaltung ist nur deshalb möglich, da erfindungsgemäß das Abgas zur Rezirkulation direkt nach dem Aggregat abgezogen wird und die im Abgas zum Kamin noch vorhandene Wärme zur Vorwärmung der Verbrennungsluft genutzt werden kann. Die Gesamtmenge an Rezirkuationsgas kann bis zum 10-fachen der Abgasmenge zum Kamin betragen.

Bei einem Wassergehalt von mehr als 75% im Brennstoff kann es vorteilhaft sein, die Verbrennungsluft auch noch mit Energie aus dem Abgas nach der Nachverbrennung aufzuheizen. Hierbei ist zu berücksichtigen, dass die Abgase nach der Nachverbrennung stets einen Restsauerstoff enthalten. Dieser Sauerstoff kann Heizflächen korrodieren, wenn das Abgas dies fördert, wie es beispielsweise der Fall ist, wenn ausreichend Chlor im Brennstoff enthalten ist. Die mögliche Vorwärmtemperatur der Verbrennungsluft aus der Energie der Nachverbrennung ist daher zumeist auf einen Wert unterhalb von rund 350 °C beschränkt.

Sofern der Brennstoff einen Wassergehalt von mehr als 70% besitzt, ist es vorteilhaft, einen Teil der nutzbaren Wärme der Abgase zur Vortrocknung des Brennstoffs zu verwenden. Bevorzugt ist, dass der Trockner eine durchströmbare Verbindung bzw. Koppelung zwischen dem Auslass des Wärmeübertragers für das getrocknete Gut und der im Unterdruck betriebenen Feuerung aufweist, über die bei der Trocknung entstehender Dampf in die Feuerung eingesaugt wird. Vorzugsweise wird in die Anlage ein Trockner integriert, dessen Brüden in die Feuerung gelangen und dort gereinigt werden. Auf diese Weise lassen sich auch noch Brennstoffe bei einem Wassergehalt von rund 85% einsetzen.

Der Trockner wird erfindungsgemäß bevorzugt mit hohem Wirkungsgrad ausgeführt, als sogenannter Kontakttrockner. Ein Konvektionstrockner benötigt derart viel verdünnende Luft in den Brüden, dass sich die Nutzung der Brüden als Verbrennungsluft ausschließt, da die erforderliche Leistung der Feuerung weit oberhalb des Wärmebedarfs des Konvektionstrockners läge. Ein Konvektionstrockner eignet sich nicht zur integrierten Kombination mit einer Feuerung. Ein Kontakttrockner und insbesondere der Floradry-Kontakttrockner benötigt keinerlei Luft, so dass die Brüden - bis auf geringe Falschluftanteile - nicht mit Luft verdünnt sind. Der Einsatz eines Kontakttrockners verringert die in den Trockner eingetragene Falschluft auf ein Minimum und maximiert die Toleranz der Anlage hinsichtlich des maximal zulässigen Wassergehalts im nassen Brennstoff. Die bei der Trocknung entstehenden Brüden werden erfindungsgemäß direkt in der Feuerung verwertet.

Der Kontakttrockner kann besonders einfach realisiert werden, wenn man die Abgase vor Eintritt in den Trockner durch Abgasrezirkulation auf unter 400 °C abkühlt. Dies vereinfacht die sicherheitstechnischen Anforderungen an den Kontakttrockner erheblich. Es ist natürlich auch jede andere Temperatur als Eintrittstemperatur in die Aggregate zur Nutzung der im Abgas enthaltenen Wärme denkbar.

Der Kontakttrockner gewährleistet einen effizienten Wärmeübergang auf das zu trocknende Material und einen hohen Durchsatz des Trockners. Bevorzugt ist, dass der Kontakttrockner als indirekter Trockner mit Dampf als Wärmeübertragungsmedium ausgeführt wird. Vorteilhaft wären in einem oberen Bereich die Trocknungsrohre angeordnet, in denen das zu trocknende Gut mittels einer Fördereinrichtung wie z. B. eine seelenlose Schnecke gefördert wird. Der Dampf kondensiert bei der Beheizung der Trocknungsrohre an der Außenseite der Rohrwand und tropft nach unten ab. In einem unteren Bereich sind die Heizrohre angeordnet, in denen die Abgase die Wärme an Wasser abgeben, das hierdurch verdampft; der Dampf steigt nach oben in den Bereich der Trocknungsrohre und schließt so den Kreislauf eines Naturumlauf-Dampferzeugers mit integriertem Kondensator. Der Trocknungs- und der Heizbereich sind vorteilhaft durch einen gemeinsamen zylindrischen Mantel umschlossen, der auch die Kraft aus dem Druck des Dampfes aufnimmt. Das zu trocknende Gut ist hierbei in Kontakt mit der Innenwand des ihn umgebenden Trocknungsrohres und wird in dessen Längsrichtung gefördert. Beim Heizbereich kann es auch vorteilhaft sein, die Abgase nicht durch, sondern um die Rohre strömen zu lassen und die Rohre mit Rippen zu versehen. Die Heizrohre würden in diesem Fall außerhalb des Mantels angeordnet werden und mit ihm durch zumindest ein Rohr verbunden sein; die Anordnung der Heizrohre erfolgt jedoch stets unterhalb der Trocknungsrohre.

Die dezentrale, kleinteilige Anlage ermöglicht auch, die Anlage mit den an einem Standort schon bestehenden Energieanlagen zu kombinieren. Beispielsweise können die mechanisch vorentwässerten Gärreste einer Biogasanlage als Einsatzstoff in der Wirbelschichtfeuerung verwendet und das Abgas nach der Entstaubung dem Biogas zur Nutzung im Kolbenmotor beigemischt werden. Aufstellungsort der Anlage wäre in diesem Falle der Ort der Biogasanlage. Ist der Aufstellungsort ein Lebensmittelbetrieb, so können die Lebensmittelabfälle aus der Produktion als Einsatzstoff für die Wirbelschichtfeuerung verwendet und das Abgas nach der Entstaubung in einem - dort üblicherweise vorhandenen - Dampfkessel mit verbrannt werden. Sofern es sich um die Entsorgung von Biomassen wie zuvor beschrieben handelt, bietet sich auch vorteilhaft an, die Anlage an einem Standort im betreffenden Entsorgungsgebiet aufzustellen, an dem die Wärme oder auch das Abgas direkt genutzt werden kann. Dies schließt auch ein, dass das Abgas schon direkt nach dem Wärmeübertrager und vor der Filtereinheit genutzt wird, beispielsweise zur Eindüsung in den Feuerraum einer größeren Feststofffeuerung wie z. B. bei Heiz- oder Heizkraftwerken, die mit festen Brennstoffen, z. B. mit Kohle befeuert sind.

Besonders vorteilhaft ist die Wirbelschichtfeuerung bei der Verwendung in einem Verfahren zur Aufbereitung von feuchter Biomasse zu Brennstoff, wie es beispielsweise in EP 1 443 096 A1 oder EP 1 587 899 A1 offenbart ist. Bei diesem Verfahren werden die an Biomasse teils anhaftenden Verunreinigungen wie z. B. als Staub anhaftende Schwermetalle und gelöste Salze gezielt ausgewaschen, bevor die Biomasse weiter zum Brennstoff aufbereitet wird. Die Kombination ermöglicht es, die Schritte "thermische Trocknung" und "Pelletierung" aus dem vorgenannten Verfahren zumindest für den Teil einzusparen, der direkt für den Anlagenbetrieb durch Erzeugung von Wärme und Strom verwendet wird.

In einem weiteren Einsatzbereich eignet sich die Erfindung natürlich auch, wenn bereits trockneres Material eingesetzt wird, um mit dem dann verbleibenden Wärmeüberschuß weitere Materialien zu trocknen, die außerhalb der Anlage verwendet werden. Der wesentliche Vorteil der Erfindung ist, dass dies nun auch im kleinen Leistungsbereich von weniger als 1 MW und in mobilen Anlagen möglich wird.

### Ausführungsbeispiel

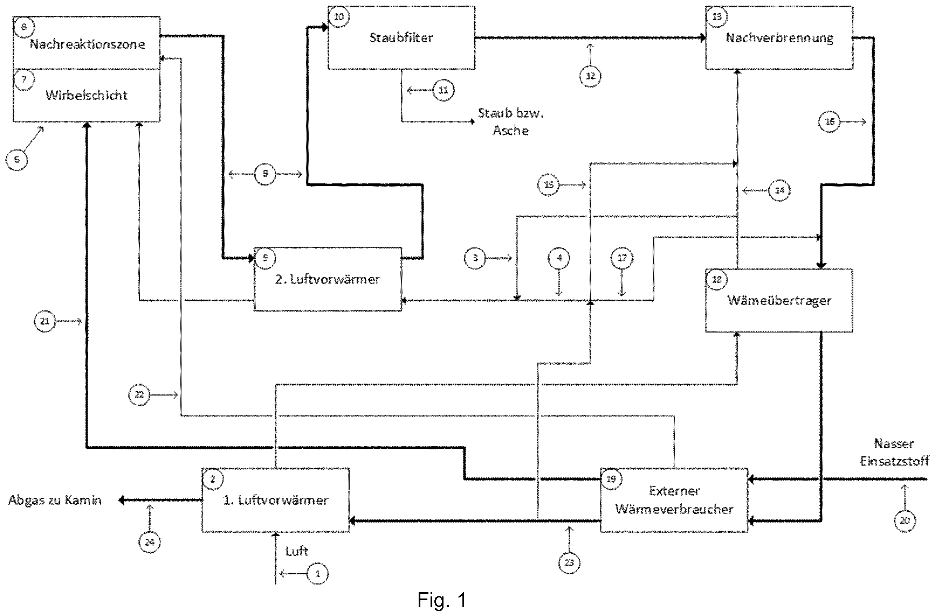

Die Erfindung wird anschließend an Hand eines Ausführungsbeispiels, das in der einzigen Figur in schematischer Ansicht dargestellt ist, noch näher erläutert. Die Pfeile in der Figur geben die Förderrichtung des jeweilig geförderten Mediums an; sie stehen für Rohrverbindungen, Kanäle oder Schächte für Brennstoffe oder Gase.

Verbrennungsluft 1 wird aus der Umgebung angesaugt und über einen Wärmetauscher 2 vorgewärmt, optional existiert auch eine weitere Vorwärmstufe 18. Nach der Vorwärmung wird ein Teil der Verbrennungsluft 3 mit rezirkuliertem Abgas 4 gemischt und in einem weiteren Wärmetauscher 5 erhitzt, bevor es in die Vorverbrennung 6 gelangt. In der Vorverbrennung 6 befindet sich im unteren Bereich die stationäre, blasenbildende Wirbelschicht 7, oberhalb die Nachreaktionszone 8 (Freeboard). Das aus der Nachreaktionszone 8 abgezogene, teilverbrannte Abgas 9 wird in einem Wärmetauscher 5 abgekühlt, wobei die Verbrennungsluft 4 und das rezirkulierte Abgas 5 aufgeheizt werden. Das abgekühlte Abgas wird einem Staubfilter 10 zugeführt. Im Staubfilter wird der im Abgas enthaltene Staub 11 abgeschieden, so dass staubfreies Abgas 12 das Staubfilter zur Nachverbrennung 13 verlässt. In der Nachverbrennung 13 wird eine weitere Mischung aus Verbrennungsluft 14 und rezirkuliertem Abgas 15 zugegeben, um einen vollständigen Ausbrand der Abgase aus der Vorverbrennung zu erreichen. Die ausgebrannten Abgase 16 verlassen die Nachverbrennung und werden gegebenenfalls mit rezirkuliertem Abgas 17 gekühlt. In einem weiteren optionalen Wärmetauscher 18 wird die Verbrennungsluft 1 erhitzt, wobei die Abgase 16 aus der Nachverbrennung weiter abgekühlt werden. Nach dem Wärmetauscher 18 gelangen die Abgase in einen externen Wärmeverbraucher oder eine Arbeitsmaschine 19 (in diesem Beispiel ein Trockner), in dem der nasse Einsatzstoff 20 vorgetrocknet wird. Der getrocknete Einsatzstoff 21 wird der Vorverbrennung 6 im Bereich der Wirbelschicht 7 zugeführt. Die bei der Trocknung entstehenden Brüden 22 werden ebenfalls der Vorverbrennung 6 zugeführt, jedoch im Bereich der Nachreaktionszone 8. Aus den Abgasen 23 nach dem Trockner 19 wird das rezirkulierte Abgas abgezweigt (4, 15, 17). Nach dem Abzweig wird das Abgas durch einen weiteren Wärmetauscher 2 geleitet, in dem die erste Stufe der Vorwärmung der Verbrennungsluft 1 erfolgt. Am Ende verlassen die Abgase 24 die Anlage.

Sofern der externe Wärmeverbraucher 19 kein Trockner ist, gelangt der nasse Einsatzstoff 20 direkt als Stoffstrom 21 in die Wirbelschicht, wobei dann der Stoffstrom der Brüden 22 entfällt.

### Bezugszeichenliste

- 1: Verbrennungsluft
- 2: erster Luftvorwärmer
- 3: Verbrennungsluft zur Vorverbrennung
- 4: Rezirkulationsgas zur Vorverbrennung
- 5: zweiter Luftvorwärmer
- 6: Vorverbrennung
- 7: Wirbelschicht
- 8: Nachreaktionszone
- 9: teilverbranntes Abgas
- 10: Staubfilter
- 11: im Staubfilter abgeschiedener Staub (Asche)
- 12: staubfreies, teilverbranntes Abgas
- 13: Nachverbrennung
- 14: Verbrennungsluft zur Nachverbrennung
- 15: rezirkuliertes Abgas zur Nachverbrennung
- 16: ausgebranntes Abgas
- 17: rezirkuliertes Abgas zur Kühlung der Abgase
- 18: optionaler Wärmeübertrager
- 19: externer Wärmeverbraucher (z. B. Trockner oder Arbeitsmaschine)
- 20: nasser Einsatzstoff
- 21: getrockneter Einsatzstoff
- 22: Brüden
- 23: Abgas nach externem Wärmeverbraucher
- 24: Abgas zum Kamin

## Patentansprüche

1. Verfahren zur Verbrennung von feuchten Einsatzstoffen, welches als gestufte Feuerung durchgeführt wird und folgende Schritte aufweist:
a) eine als Wirbelschichtfeuerung ausgebildete Vorverbrennung (6); woran sich
b) ein Wärmeübergang in einem Wärmetauscher (5) anschließt; gefolgt von
c) einer Staubabscheidung (10) welcher
d) eine Nachverbrennung (13) folgt;
wobei
beim Wärmeübergang im Wärmetauscher (5) Abgase aus der Vorverbrennung (6) abgekühlt und Verbrennungsluft zur Vorverbrennung (6) mit den Abgasen aufgeheizt und anschließend der Vorverbrennung (6) zugeführt werden.

2. Verfahren nach Anspruch 1, **dadurch gekennzeichnet, dass** die Verbrennungsluft zur Vorverbrennung und/oder zur Nachverbrennung eine Mischung von Frischluft und rezirkuliertem Abgas aus der Nachverbrennung ist.

3. Verfahren nach Anspruch 1 oder 2, **dadurch gekennzeichnet, dass** die Verbrennungsluft für die Vorverbrennung im Wärmetauscher auf zumindest 200°C aufgeheizt wird.

4. Verfahren nach Anspruch 3, **dadurch gekennzeichnet, dass** die Verbrennungsluft für die Verbrennung im Wärmetauscher auf zumindest 400° C, aufgeheizt wird.

5. Verfahren nach einem der Ansprüche 2 bis 4, **dadurch gekennzeichnet, dass** die Frischluft zur Vor- und / oder Nachverbrennung in einem weiteren Wärmetauscher von Abgas der Nachverbrennung vorgewärmt wird.

6. Verfahren nach Anspruch 5, **dadurch gekennzeichnet, dass** ein Teil der thermischen Energie des Abgases aus der Nachverbrennung vor dem Eintritt in den weiteren Wärmetauscher zur Vorwärmung der Verbrennungsluft genutzt wird.

7. Verfahren nach Anspruch 6, **dadurch gekennzeichnet, dass** die Nutzung dieses Teils der thermischen Energie in einem Trockner, in welchem die feuchten Einsatzstoffe ganz oder teilweise vorgetrocknet werden, erfolgt.

8. Verfahren nach Anspruch 7, **dadurch gekennzeichnet, dass** die Trocknung mittels eines Kontakttrockners durchgeführt wird.

9. Verfahren nach Anspruch 7 oder 8, **dadurch gekennzeichnet, dass** Brüden aus der Trocknung der Vorverbrennung zugeführt werden.

10. Verfahren nach Anspruch 9, **dadurch gekennzeichnet, dass** mit Abwärme aus der Vorverbrennung die Brüden aus dem Trockner aufgeheizt werden, bevor sie der Vorverbrennung zugeführt werden.

11. Verfahren nach einem der vorhergehenden Ansprüche, **dadurch gekennzeichnet, dass** die Abgase aus der Vorverbrennung derart durch den Wärmetauscher geleitet werden, dass sie beim Eintritt in einen als Staubabscheidung ausgebildeten Staubfilter, vorzugsweise beim Austritt aus dem Staubfilter, eine Temperatur von zumindest 400 °C haben.

12. Verfahren nach Anspruch 11, **dadurch gekennzeichnet, dass** aus der im Staubfilter ausgeschiedenen Asche Phosphor und/oder weitere Stoffe extrahiert werden.

13. Verfahren nach einem der vorhergehenden Ansprüche, **dadurch gekennzeichnet, dass** als feuchte Einsatzstoffe Klärschlamm, Gärreste, Laub, Grasschnitt, Algen, Wasserhyazinthen und/oder Abfälle der Lebensmittelindustrie verwendet werden.

## Claims

1. Method for the combustion of moist charge materials, which method is performed as staged firing and has the following steps:
a) a pre-combustion process (6) in the form of a fluidized-bed firing process; followed by
b) a heat transfer process in a heat exchanger (5); followed by
c) a dust separation process (10), followed by
d) a post-combustion process (13);
wherein,
in the heat transfer process in the heat exchanger (5), exhaust gases from the pre-combustion process (6) are cooled and combustion air for the pre-combustion process (6) is heated by means of the exhaust gases and is subsequently fed to the pre-combustion process (6).

2. Method according to Claim 1, **characterized in that** the combustion air for the pre-combustion process and/or for the post-combustion process is a mixture of fresh air and recirculated exhaust gas from the post-combustion process.

3. Method according to Claim 1 or 2, **characterized in that** the combustion air for the pre-combustion process is heated in the heat exchanger to at least 200°C.

4. Method according to Claim 3, **characterized in that** the combustion air for the combustion process is heated in the heat exchanger to at least 400°C.

5. Method according to any of Claims 2 to 4, **characterized in that** the fresh air for the pre-combustion and/or post-combustion process is preheated in a further heat exchanger by exhaust gas of the post-combustion process.

6. Method according to Claim 5, **characterized in that** a part of the thermal energy of the exhaust gas from the post-combustion process is utilized, upstream of the inlet into the further heat exchanger, for pre-heating the combustion air.

7. Method according to Claim 6, **characterized in that** the utilization of said part of the thermal energy is performed in a dryer, in which the moist charge materials are entirely or partially pre-dried.

8. Method according to Claim 7, **characterized in that** the drying process is performed by means of a contact dryer.

9. Method according to Claim 7 or 8, **characterized in that** the vapours from the drying process are fed to the pre-combustion process.

10. Method according to Claim 9, **characterized in that** the vapours from the drying process are heated using waste heat from the pre-combustion process before said vapours are fed to the pre-combustion process.

11. Method according to any of the preceding claims, **characterized in that** the exhaust gases from the pre-combustion process are conducted through the heat exchanger such that said exhaust gases are at a temperature of at least 400°C at the inlet into a dust filter designed as a dust-separating means, preferably at the outlet from the dust filter.

12. Method according to Claim 11, **characterized in that** phosphorus and/or further substances are extracted from the ashes that are separated out in the dust filter.

13. Method according to any of the preceding claims, **characterized in that**, as moist charge materials, use is made of sewage sludge, fermentation residues, foliage, grass cuttings, algae, water hyacinths and/or waste from the food industry.

## Revendications

1. Procédé pour l'incinération d'ingrédients humides, qui est réalisé sous la forme d'une combustion étagée et comprend les étapes suivantes :
a) une pré-incinération (6) configurée sous la forme d'une combustion en lit fluidisé, qui est suivie par
b) un transfert de chaleur dans un échangeur de chaleur (5), suivi par
c) une séparation de poussières (10), qui est suivie par
d) une post-incinération (13) ;
dans lequel, lors du transfert de chaleur dans l'échangeur de chaleur (5), des gaz d'échappement issus de la pré-incinération (6) sont refroidis et un air d'incinération pour la pré-incinération (6) est chauffé avec les gaz d'échappement, puis introduit dans la pré-incinération (6).

2. Procédé selon la revendication 1, **caractérisé en ce que** l'air d'incinération pour la pré-incinération et/ou pour la post-incinération est un mélange d'air frais et d'un gaz d'échappement recyclé issu de la post-incinération.

3. Procédé selon la revendication 1 ou 2, **caractérisé en ce que** l'air d'incinération pour la pré-incinération est porté à au moins 200 °C dans l'échangeur de chaleur.

4. Procédé selon la revendication 3, **caractérisé en ce que** l'air d'incinération pour l'incinération est porté à au moins 400 °C dans l'échangeur de chaleur.

5. Procédé selon l'une quelconque des revendications 2 à 4, **caractérisé en ce que** l'air frais pour la pré- et/ou post-incinération est préchauffé dans un échangeur de chaleur supplémentaire par le gaz d'échappement de la post-incinération.

6. Procédé selon la revendication 5, **caractérisé en ce qu'**une partie de l'énergie thermique du gaz d'échappement issu de la post-incinération est utilisée avant l'entrée dans l'échangeur de chaleur supplémentaire pour le préchauffage de l'air d'incinération.

7. Procédé selon la revendication 6, **caractérisé en ce que** l'utilisation de cette partie de l'énergie thermique a lieu dans un séchoir, dans lequel les ingrédients humides sont préséchés en totalité ou en partie.

8. Procédé selon la revendication 7, **caractérisé en ce que** le séchage est réalisé au moyen d'un séchoir à contact.

9. Procédé selon la revendication 7 ou 8, **caractérisé en ce que** des vapeurs issues du séchage sont introduites dans la pré-incinération.

10. Procédé selon la revendication 9, **caractérisé en ce que** les vapeurs issues du séchoir sont chauffées avec de la chaleur résiduaire issue de la pré-incinération avant leur introduction dans la pré-incinération.

11. Procédé selon l'une quelconque des revendications précédentes, **caractérisé en ce que** les gaz d'échappement issus de la pré-incinération sont acheminés au travers de l'échangeur de chaleur de telle sorte qu'ils aient une température d'au moins 400 °C lors de l'entrée dans un filtre à poussières configuré sous la forme d'un séparateur de poussières, de préférence lors de la sortie du filtre à poussières.

12. Procédé selon la revendication 11, **caractérisé en ce que** du phosphore et/ou d'autres matières sont extraits à partir des cendres séparées dans le filtre à poussières.

13. Procédé selon l'une quelconque des revendications précédentes, **caractérisé en ce que** des boues d'épuration, des résidus de fermentation, des feuilles, de l'herbe coupée, des algues, des jacinthes d'eau et/ou des déchets de l'industrie alimentaire sont utilisés en tant qu'ingrédients humides.
